Europäisches Patentamt

European Patent Office

Office européen des brevets

(11) Publication number: **0 249 581**
**A1**

## (12) EUROPEAN PATENT APPLICATION

(21) Application number: 87830205.8

(22) Date of filing: 01.06.87

(51) Int. Cl.⁴: **F 16 H 5/06**

(30) Priority: 10.06.86 IT 6747686

(43) Date of publication of application:
16.12.87 Bulletin 87/51

(84) Designated Contracting States: **DE ES FR GB SE**

(71) Applicant: **FIAT AUTO S.p.A.**
**Corso Giovanni Agnelli 200**
**I-10135 Torino (IT)**

(72) Inventor: **Montanaro, Enrico**
**Via Frejus 17**
**I-10095 Grugliasco Torino (IT)**

(74) Representative: **Buzzi, Franco et al**
**c/o Jacobacci-Casetta & Perani S.p.A. Via Alfieri, 17**
**I-10121 Torino (IT)**

(54) Device for engaging reverse for motor vehicle gearboxes.

(57) A device for engaging reverse in a motor vehicle gearbox with five forward speed ratios comprises a control rod (4) movable axially between a first axial position of engagement of the fifth ratio and a second axial position of engagement of reverse, and having a transverse catch appendage (9) for controlling the pivoting of a fork (8) for engaging reverse, which is articulated to the support structure (1) of the gearbox and with which snap-positioning means (17-20) are associated.

FIG. 3

EP 0 249 581 A1

Bundesdruckerei Berlin

**Description**

Device for engaging reverse for motor vehicle gearboxes

The present invention refers in general to a motor vehicle gearbox having five forward speed ratios and one reverse speed ratio.

More particularly, the invention concerns a device for engaging reverse for gearboxes of the type defined above, including a control rod which can be moved axially relative to the support structure of the gearbox between a first axial position of engagement of the fifth ratio and a second axial position of engagement of reverse located on opposite sides of an intermediate neutral position, and a fork for engaging reverse operated by the control rod.

In known devices for engaging reverse of the type defined above, the system for operating the fork through the control rod is generally complicated and therefore expensive in view of the need for an extended reverse selection stroke.

The object of the present invention is to overcome this disadvantage and provide a device for engaging reverse of the type defined above, which consists of a reduced number of components and is therefore simpler and cheaper to manufacture and safe and reliable in operation.

In order to achieve this object, the subject of the present invention is a device for engaging reverse of the type specified at the beginning, characterised in that the control rod carries a transverse catch appendage and the fork for engaging reverse is pivoted on the support structure of the gearbox about an axis parallel to the catch appendage and has a recess which is bounded on one side by a thrust projection engageable by the catch appendage when the rod moves from the intermediate neutral position to the position of engagement of reverse, so as to cause pivoting of the fork into an angular operating position corresponding to the engagement of reverse, and on the other side by a return projection engageable by the catch appendage when the rod moves from the position of engagement of reverse to the intermediate neutral position, so as to cause pivoting of the fork in the opposite sense into an angular rest position, snap-positioning means being provided to hold the fork in the angular operating and rest positions respectively.

According to the invention, the snap-positioning means comprise two lateral notches formed in the fork, and a pin parallel to the pivot axis of the fork and supported by the support structure so as to be slidable transverse the axis in order to engage one or other of the notches of the fork under the action of a thrust spring.

The invention will now be described in detail with reference to the appended drawings supplied purely by way of non-limiting example, in which:

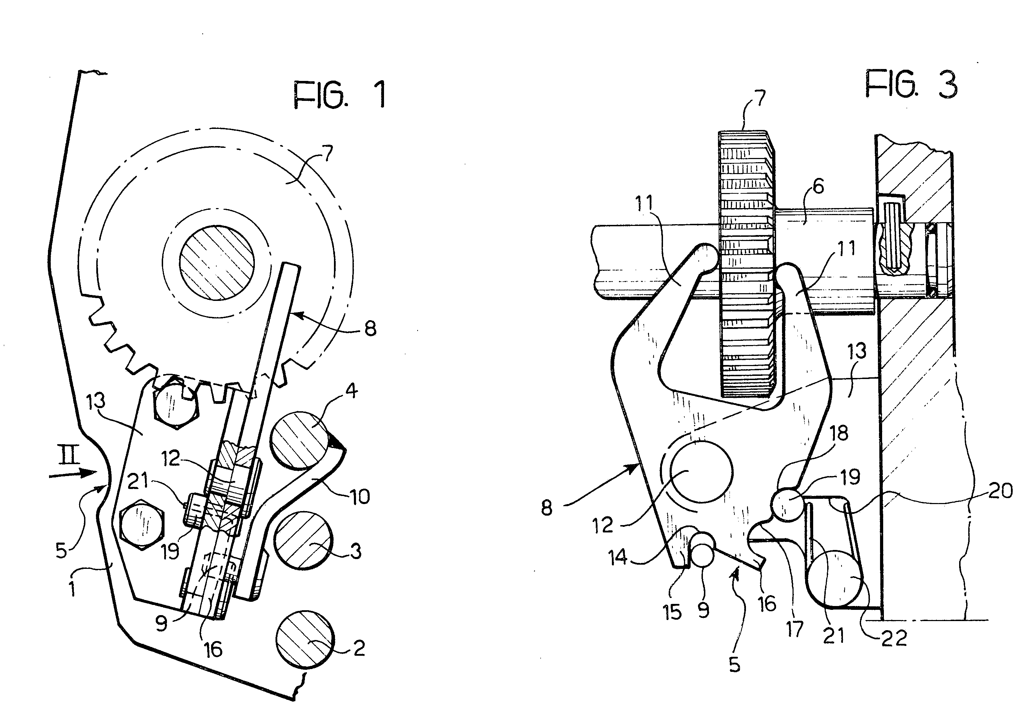

Figure 1 is a diagrammactic cross-sectional view of part of a motor vehicle gearbox provided with a device for engaging reverse in accordance with the invention,

Figure 2 is a view along the arrow II of Figure I, with the engagement device in an inoperative rest position, and

Figure 3 is a view similar to Figure I with the engagement device in the operative position of engaging reverse.

With reference to the drawings, the support structure (housing) of a motor vehicle gearbox with five forward speed ratios and a reverse speed ratio is generally indicated I. The conformation of the gearbox is generally known in itself and, for brevity, will not therefore be described in detail. For the purposes of the present invention, it is sufficient to say the gearbox comprises a series of pairs of gears which are constantly meshed and devices for controlling the engagement of the various gears, including three parallel control rods 2, 3 and 4 slidable relative to the structure I to effect the engagement of the first or second, the third or fourth, and the fifth or reverse gear, respectively.

In particular, the control rod 4 can be moved axially relative to the support structure I between a first axial position of engagement of the fifth gear and a second axial position of engagement of reverse located on opposite sides of an intermediate neutral position.

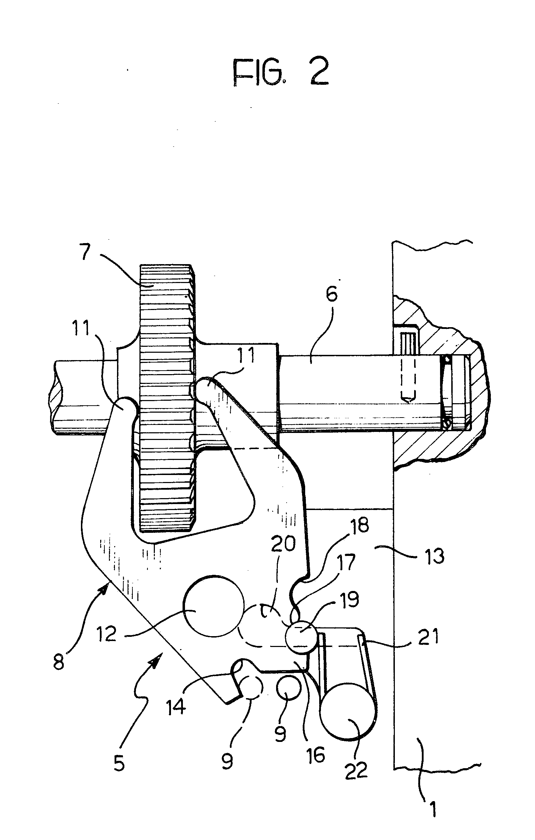

A device for engaging reverse generally, indicated 5, is associated with the control rod 4 and cooperates with a reversing shaft 6 on which a reversing idle gear 7 is mounted for sliding between the positions illustrated in Figures 2 and 3.

The engaging device 5 comprises basically an engaging fork 8 and a catch appendage 9 carried by the control rod 4 by means of a support I0 and arranged transverse the control rod 4.

The engaging fork 8 consists of a plate which has two prongs II arranged on opposite sides of the reversing idle gear 7 and is articulated about a pin I2 parallel to the catch appendage 9 and carried by a support bracket I3 fixed to the support structure I of the gearbox.

On its side opposite the two prongs II, the fork 8 has a recess I4 which is bounded on one side by a thrust projection I5 and on the opposite side by an oblique return projection I6 followed by a pair of lateral positioning notches I7, I8. A positioning pin I9, which is arranged parallel to the pivot pin I2 of the fork 8 and is slidable in a slot 20 in the bracket I3, cooperates with the positioning notches I7 and I8. The positioning pin I9 is acted upon by a pin spring 2I which is wound around a pin 22 carried by the bracket I3 and tends to urge the positioning pin I9 against the side of the fork 8 in which the positioning notches I7 and I8 are made.

The recess I4 with the thrust projection I5 and the return projection I6 cooperates with the catch appendage 9 carried by the control rod 4 in the ways described below.

Figures 2 and 3 show the position assumed by the catch appendage 9 and the fork 8 when the control rod 4 is arranged in the axial position corresponding to the engagement of the fifth gear and in the axial position corresponding to the engagement of

**0 249 581**

reverse, respectively. In the first case (Figure 2), the catch appendage 9 is arranged below the thrust projection 16 and hence outside the recess 14, and the positioning pin 19 is engaged in the positioning notch 17. In this position, the reversing idle gear 7 is held in a disengaged position.

When the control rod 4 is arranged in the intermediate neutral position, the catch appendage 9 is arranged in the position shown by a dotted line in Figure 2, in contact with the thrust projection 15 and in correspondence with the recess 14, while the fork 8 is held in the angular position of Figure 2.

When the control rod 4 is moved into the axial position corresponding to the engagement of reverse, the catch appendage 9 presses against the thrust projection 15 and causes pivoting of the fork 8 about the axis of the pin 12 in a clockwise sense relative to the Figures. The rotation of the fork 8 continues, causing the reversing idle gear 7 to move into the engaged position and the catch appendage 9 to engage the recess 14. At the same time, the positioning pin 19 disengages from the positioning notch 17, deforming the spring 21, and engages the positioning notch 18 (Figure 3).

When the control rod 4 is moved again from the axial position of engagement of reverse to the intermediate neutral position, the catch appendage 9 slides against the return projection 16 so as to rotate the fork 8 in an anticlockwise sense relative to the drawings until it again reaches the position shown in Figure 2, in which the positioning pin 19 engages the notch 17.

**Claims**

1. A device for engaging reverse in a motor vehicle gearbox with five forward speed ratios and one reverse speed ratio, including a support structure, a control rod which can be moved axially relative to the support structure between a first axial position of engagement of the fifth ratio and a second axial position of engagement of reverse located on opposite sides of an intermediate neutral position, and a fork for engaging reverse operated by the control rod, characterised in that the control rod (4) carries a transverse catch appendage (9) and the fork for engaging reverse (8) is pivoted on the support structure (1) about an axis (12) parallel to the catch appendage (9) and has a recess (14) which is bounded on one side by a thrust projection (15) engageable by the catch appendage (9) when the control rod (4) moves from the intermediate neutral position to the position of engagement of reverse, so as to cause pivoting of the fork (8) into an angular operating position corresponding to the engagement of reverse, and on the opposite side by a return projection (16) engageable by the catch appendage (9) when the control rod (4) moves from the position of engagement of reverse to the intermediate neutral position, so as to cause pivoting of the fork (8) in the opposite sense into an angular rest position, snap-positioning means (17, 18, 19, 20) being provided to hold the fork (8) in the angular operating and rest positions respectively.

2. Device according to Claim 1, characterised in that the snap-positioning means include two lateral notches (17, 18) formed in the fork (8), and a pin (19) parallel to the pivot axis (12) of the fork (8) and supported by the support structure (1) so as to be slidable transverse the axis to engage one or other of the positioning notches (17, 18) of the fork (8) under the action of a thrust spring (21).

0249581

FIG. 3

FIG. 1

0249581

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 165 901 (HONDA GIKEN KOGYO) * Page 5, line 105 - page 6, line 6; figure 11 * | 1 | F 16 H 5/06 |
| A | | 2 | |
| | --- | | |
| Y | FR-A-2 556 292 (USTAV PRO VYZKUM) * Whole document * | 1 | |
| | ----- | | |

TECHNICAL FIELDS SEARCHED (Int. Cl.4)

F 16 H
G 05 G

The present search report has been drawn up for all claims

| Place of search | Date of completion of the search | Examiner |
|---|---|---|
| THE HAGUE | 21-09-1987 | BEERNAERT J.E. |